# EUROPEAN PATENT SPECIFICATION

(11) **EP 3 133 099 B1**
(45) Date of publication and mention of the grant of the patent: **30.09.2020**
(21) Application number: 15181475.3
(22) Date of filing: 18.08.2015
(51) Int. Cl.: C08G 18/76, C08G 18/08, C08G 18/16, C08G 18/18, C08G 18/20, C08G 18/22, C08G 18/24, C08G 18/32, C08G 18/40, C08G 18/66, C08G 18/48

(54) **POLYMER-MODIFIED POLYOL DISPERSION**
POLYMERMODIFIZIERTE POLYOLDISPERSION
DISPERSION DE POLYOL MODIFIÉE PAR POLYMÈRE

(43) Date of publication of application: 22.02.2017
(73) Proprietor: PCC Rokita SA, 56-120 Brzeg Dolny (PL)
(72) Inventor: TOMCZAK, Marcin, 54-233 Wroclaw (PL); WUILAY, Herve, 8832 Wollerau (CH); SALASA, Michal, 23-114 Jablonna (PL); MAKULA, Lukasz, 58-500 Jelenia Gora (PL); KACPERSKI, Michal, 54-613 Wroclaw (PL); STORZER, Uwe, 72076 Tübingen (DE)
(74) Representative: Cohausz & Florack

(56) References cited:
- WO-A1-2008/116605
- WO-A1-2012/154820
- WO-A1-2013/148252
- WO-A1-2015/038825
- WO-A2-2012/154831
- WO-A2-2014/200452

## Description

The invention relates to a method for preparing a polymer-modified polyol dispersion, to the polymer-modified polyol dispersion obtainable according to this method, and to the use of the dispersion in the manufacture of polyurethane plastics.

Polyurethane (PU) foams can be prepared by reacting a polyol with a multifunctional isocyanate so that the isocyanate and hydroxyl groups form urethane linkages by an addition reaction, and the polyurethane is foamed with, for example, carbon dioxide produced in situ by reaction of the isocyanate with water. This process can be conducted in a single step, also called 'one-shot' process. However, it is also possible to first prepare a prepolymer which is then further reacted to the final foam. General examples for such prepolymers are polymer-modified polyols.

Polymer-modified polyols contain polymeric filler material in a base polyol. The polymeric filler material may be incorporated as an inert filler material dispersed in the base polyol or at least partially as a copolymer with the base polyol. Examples for polymeric filler materials are copolymerized acrylonitrile-styrene polymer polyols ("SAN" polyols as described in GB 1 482 213), the reaction product of diisocyanates and diamines ("PHD" polyols as described in GB 1 501 172), and the polyaddition product of diisocyanates with amine alcohols ("PIPA" polyols as described in US 4,374,209).

Polymer-modified polyols have been used as starting material for the preparation of other polymers, in particular for polymer foams. In particular, PIPA polyols that contain polyurethanes have been used for the preparation of PU foams. However, PIPA polyols may also be used for the preparation of solid PU elastomers.

Among the polymer foams, there are different types of foams with different properties for different applications. With regard to the stiffness of the polymer foams, there are flexible, semi-flexible, and rigid polymer foams. With regard to the density of the polymer foam, there are low density, high density, and microcellular polymer foams.

Flexible polymer foams with a low density, also known as high-resilience (HR) foams, are frequently used for bedding and upholstery. One characteristic feature of HR foams is the so-called SAG factor that describes the comfort of the foam when used for bedding or upholstery. The SAG factor is the ratio of Indentation Force Deflection (IFD), or Indentation Load Deflection (ILD) at 65 % deflection to that at 25 % deflection (ASTM D-1564-64T). IFD (or ILD) is the force required to keep a foam sample indented for a period of time, typically the force in pounds (0.45 kg) required to deflect a 15" x 15" x 4" (38.1 cm x 38.1 cm x 10.16 cm) block with a 50 in² (322.58 cm²) plate for 1 minute.

HR foams can be prepared using different starting materials and different processes. For example, HR foams can be prepared by reaction of polyols with polyisocyanates under foaming conditions. The resulting high resilience polyurethane foams are then also called HR PU foams.

Originally, HR PU foam was made from 'reactive' polyether polyol and higher or enhanced functionality isocyanate. The base polyol was typically a higher than usual molecular weight (4000 to 6000) ethylene oxide and/or propylene oxide polyether polyol having a certain level of primary hydroxyl content (for example more than 50 %), and the isocyanate was methylene diphenyl-diisocyanate (MDI) or a mixture of MDI and toluene diisocyanate (TDI), or a prepolymer TDI.

More recently, however, HR PU foams have also been prepared from polymer-modified polyols, in particular using SAN polyols or PIPA polyols, as starting material.

One important aspect of polymer-modified polyols is their solid content. Methods of determining the solid content are known in the art.

Several methods have been proposed for the preparation of polymer-modified polyols.

GB 2 098 229 A describes a method for the preparation of a stable polyurethane dispersion in a liquid polyether polyol by mixing and reacting a nitrogen compound comprising hydroxyl groups in its molecule with a substantially stoichiometric amount or less than stoichiometric amount of an organic isocyanate while the nitrogen compound is dissolved or dispersed in the polyether polyol.

WO 2008/116605 A1 describes a method of making a polymer-modified polyol wherein an olamine is reacted with an organic polyisocyanate in the presence of a polyol and at least one catalyst wherein the catalyst is selected from a metal salt of an organic acid having no metal-carbon bond. The resulting polymer-modified polyol has a viscosity of at least 2250 mPa·s.

While it is possible to obtain polymer-modified polyols with the methods mentioned above, the solid content in these methods is rather low. However, a high solid content is desirable because it can allow to obtain HR foams with better mechanical properties.

WO 2015/038827 A1 describes a method for making flexible polyurethane foams from PIPA polyols with a solid content from 10 to 75 wt.%. The base polyol used for the preparation of the PIPA polyol contains at least 80 % secondary hydroxyl groups.

Another problem associated with HR foams, in particular HR foams prepared from SAN polyols is the fact that they can contain a substantial amount of volatile organic compounds (VOC), for example unreacted monomers. These VOC can diffuse out of the foam at a later stage which may lead to unpleasant odors or, in extreme cases, may even be unhealthy.

Therefore, it is an object of the present invention to provide a method for the preparation of polymer-modified polyols that allow for the preparation of HR foams with good mechanical properties.

It is another object of the present invention to provide a method for the preparation of polymer-modified polyols with a low VOC content.

### SUMMARY OF THE INVENTION

By using the present invention, some or all of the difficulties and drawbacks of the prior art can be overcome. In particular, some or all of the difficulties and drawbacks of the prior art can be overcome by the method of claim 1, the polymer-modified polyol of claim 22, the use of a polymer-modified polyol of claim 23, and the method for the preparation of polyurethane plastics of claim 24.

Further embodiments are described in the dependent claims and will be discussed in the following.

The invention provides for a method of making a polymer-modified polyol having a solid content from 13 to 55 wt.% wherein an olamine is reacted with an organic polyisocyanate in the presence of a base polyol and at least one catalyst, wherein said at least one catalyst is a zinc carboxylate, and wherein the base polyol has hydroxyl functions wherein more than 20 % of said hydroxyl functions are primary hydroxyl functions, and wherein the reaction is carried out in the presence of a cross-linking agent having a weight average molecular weight from 200 to 1000 g/mol.

It has surprisingly been found that using the above method, a polymer-modified polyol can be obtained that can overcome some or all of the difficulties and drawbacks of the prior art mentioned above. In particular, as a result of the unique combination of making a polymer-modified polyol with a solid content from 13 to 55 wt.% by using a zinc carboxylate catalyst in combination with an olamine, a polyisocyanate, and a base polyol having hydroxyl functions wherein more than 20 % of said hydroxyl functions are primary hydroxyl functions and wherein the reaction is carried out in the presence of a cross-linking agent having a weight average molecular weight from 200 to 1000 g/mol allows the preparation of polymer-modified polyols that allow for the preparation of foams with good mechanical properties and/or a low VOC content and/or good SAG factors. Using the high solid content polymer-modified polyols, HR foams can be prepared that have good mechanical properties. For example, HR foams with high resilience can be obtained from the polymer-modified polyols according to the invention. The resilience can in particular be determined according to DIN EN ISO 8307. Moreover, from the polymer-modified polyols obtainable by the above method, foams with very good SAG factors can be obtained. Further, the foams that can be prepared using the polymer-modified polyols according to the invention can have a low VOC content. In addition, it has been found that foams prepared from the polymer-modified polyol according to the invention can show a reduced flammability.

### DETAILED DESCRIPTION OF THE INVENTION

According to the method of the invention, a polymer-modified polyol having a solid content from 13 to 55 wt.% is made wherein an olamine is reacted with an organic polyisocyanate in the presence of a base polyol and at least one catalyst, wherein said at least one catalyst is a zinc carboxylate, and wherein the base polyol has hydroxyl functions wherein more than 20 % of said hydroxyl functions are primary hydroxyl functions and wherein the reaction is carried out in the presence of a cross-linking agent having a weight average molecular weight from 200 to 1000 g/mol.

According to an embodiment of the invention, the polymer-modified polyol has a solid content from 15 to 50 wt.%. Exemplary solid contents of the polymer-modified polyol are 15 to 45 wt.%, 15 to 40 wt.%, 15 to 35 wt.%, and 15 to 30 wt.%. The solid content is preferably based on the total weight of the dispersion. The solid content can be in the form of polyurethane particles, in particular in the form of PIPA particles. The weight of the polyurethane particles, in particular of the PIPA particles, may be a calculated weight determined according to methods known in the art.

The solid content (in wt.%) of a polymer-modified polyol may be calculated by dividing the sum of amounts (wt.) of olamines, organic polyisocyanates, and, if present, crosslinking agents and, if present, other isocyanates, by the total amount (wt.) of starting materials and multiplying the result with 100.

The polymer-modified polyol can be a reaction product of a mixture containing at least an olamine, an organic polyisocyanate, a base polyol, and a zinc carboxylate catalyst. It has been found that with lower solid contents, in particular with solid contents lower than 13 wt.%, the mechanical properties of the resulting foams were not as good. Moreover, with very high solid contents, in particular with solid contents higher than 55 wt.%, the viscosity of the resulting polymer-modified polyol was too high. As a result, the processing of the polymer-modified polyol became difficult.

According to another embodiment of the invention, the equivalents ratio of active hydrogen containing groups of said olamine to isocyanate groups is from 1 to 2, in particular from 1.05 to 1.7. An equivalents ratio in this range can help to ensure complete conversion of all the isocyanate groups in the reaction mixture.

Active hydrogen containing groups can particularly be functional groups that have a deprotonable hydrogen atom bonded to an atom that is not a hydrogen atom, for example oxygen, nitrogen, or sulfur. Examples for active hydrogen containing groups are primary amines (RNH₂), secondary amines (NHR₂), hydroxyl (OH), and thiol (SH). Active hydrogen containing groups can particularly react with isocyanate groups. Examples for primary active hydrogen containing groups are primary amines, primary hydroxyl groups, and primary thiol groups.

According to another embodiment of the invention, the at least one catalyst is used in an amount of greater than 0.01, greater than 0.03 or greater than 0.04 or greater than 0.1 mmol/100 g polymer-modified polyol or in an amount of from 0.105 to 0.25 mmol/100 g polymer-modified polyol, in particular from 0.11 to 0.2 mmol/100 g polymer-modified polyol.

The amount of catalyst used can depend on the components present in the reaction mixture. Preferably, the catalyst is used in an amount of 0.105 to 0.25 mmol/100 g polymer-modified polyol, in particular from 0.11 to 0.2 mmol/100 g polymer-modified polyol, when the reaction is carried out in the presence of a cross-linking agent having a weight average molecular weight from 200 to 1000 g/mol. When the reaction is carried out in the absence of such a cross-linking agent, the catalyst is preferably used in an amount of greater than 0.01, greater than 0.03 or greater than 0.04 mmol/100 g polymer-modified polyol.

According to another embodiment of the invention, the at least one catalyst is devoid of carbon-metal bonds.

In addition to the at least one zinc carboxylate catalyst, other catalysts can be present in the reaction mixture. In particular, blends of metal catalysts, for example zinc/bismuth or zinc/bismuth/zirconium blends can be employed. Also, as used herein, the term "zinc carboxylate" encompasses mixed-type zinc carboxylates such as zinc/bismuth carboxylates or zinc/bismuth/zirconium carboxylates.

According to another embodiment of the invention, the carboxylate anion of said zinc carboxylate contains from 2 to 22, in particular from 8 to 18, carbon atoms. The number of carboxylate anions in the zinc carboxylate is preferably chosen such that the charge of the zinc cation is neutralized. It has been found that the use of zinc carboxylates with carboxylates containing an amount of carbon atoms in the above range can be helpful in achieving foams with good properties, in particular with good mechanical properties. Possibly, the reactivity of zinc catalysts with a carboxylate anion with an amount of carbon atoms outside the above range is too high or too low. Preferably, the at least one catalyst is selected from the group consisting of zinc(II) octoate, zinc(II) ricinoleate, and zinc(II) neodecanoate. Practical experiments have shown that the use of these catalysts allows to achieve polymer-modified polyols that can be used for foams and/or plastics with very good properties.

According to an embodiment of the invention, the at least one catalyst is zinc(II) octoate.

According to another embodiment of the invention, the at least one catalyst is zinc(II) ricinoleate.

According to another embodiment of the invention, the at least one catalyst is zinc(II) neodecanoate.

According to the invention, the reaction is carried out in the presence of a cross-linking agent having a weight average molecular weight from 200 to 1000 g/mol. Conducting the reaction in the presence of a cross-linking agent with a weight average molecular weight in the above range can help to obtain polymer-modified polyols that yield HR foams with improved mechanical properties. Without wishing to be bound by theory, it is believed that the use of a cross-linking agent as described herein improves the miscibility and/or the compatibility in the resulting polymer-modified polyol.

With the method according to the invention polymer-modified polyols can be obtained that can allow for the preparation of HR foams with a reduced flammability. The flammability can for example be classified according to the norms TECHNICAL BULLETIN 117-A, BS 5852:2006 Crib ignition source 5 and EN ISO 3795 (FMVSS 302).

According to another embodiment of the invention, the cross-linking agent has a weight average molecular weight from 400 to 900 g/mol, in particular from 500 to 800 g/mol. Conducting the reaction in the presence of a cross-linking agent with a weight average molecular weight in the above range can help to obtain polymer-modified polyols that yield HR foams with improved mechanical properties. In particular, conducting the reaction in the presence of a cross-linking agent with a weight average molecular weight in the above range can help in the preparation of foams with improved stability.

According to another embodiment of the invention, the cross-linking agent has a functionality of 2 to 8, in particular 3 to 6, active hydrogen containing groups, capable of reacting with isocyanate functions. It has been found that a functionality of the cross-linking agent in this range yields a polymer-modified polyol that can be used to prepare HR foams with good mechanical properties.

The functionality can in particular mean the number of functional groups, in particular the number of a specific functional group, in a molecule. For example, a cross-linking agent with a functionality of 2 to 8 active hydrogen containing groups can be a cross-linking agent in which each molecule of the cross-linking agent has 2 to 8 active hydrogen containing groups.

According to another embodiment of the invention, the cross-linking agent contains hydroxyl functions. Cross-linking agents with hydroxyl groups have been found to yield polymer-modified polyols with very good properties for HR foams.

According to another embodiment of the invention, the cross-linking agent is a polyether polyol. Polyether polyol cross-linking agents have been found to be particularly beneficial for the compatibility and the miscibility of the resulting polymer-modified polyol.

According to another embodiment of the invention, the cross-linking agent is present in the reaction in an amount of from 0.1 to 11 g/100 g polymer-modified polyol, in particular from 0.2 to 7 g/100 g polymer-modified polyol, more particularly from 0.5 to 6 g/100 g polymer-modified polyol. Practical experiments have shown that the use of more than substantially 11 g cross-linking agent per 100 g polymer-modified polyol resulted in polymer-modified polyols that yielded foams with bad properties, in particular a bad resilience and a high rigidity. On the other hand, it has been found that the use of less than 0.1 g cross-linking agent per 100 g polymer-modified polyol did not have any effect on the properties of foams prepared from the resulting polymer-modified polyols.

According to another embodiment of the invention, the base polyol has a weight average molecular weight from 2000 to 15000 g/mol, in particular from 2500 to 12000 g/mol, more particularly from 3000 to 7000 g/mol. Base polyols with a weight average molecular weight in the above range can yield polymer dispersions that result in foams with very good properties, in particular concerning their resilience.

The base polyol is preferably used in an amount of from 45 to 90 wt.%, more preferably from 60 to 87 wt.%, even more preferably from 65 to 85 wt.%, based on the amount of polymer-modified polyol.

If desired, mixtures of two or more base polyols can also be used. This can help to tailor the reactivity of the resulting polymer-modified polyol and/or to impart desired properties to the resulting foam.

According to another embodiment of the invention, more than 50 % of said hydroxyl functions of said base polyol, in particular more than 70 % or more than 80 % of said hydroxyl functions of said base polyol, are primary hydroxyl functions. It has been found that with the presence of primary hydroxyl functions in the base polyol, a polymer-modified polyol with good properties, in particular for foaming, can be obtained. Moreover, it has been found that the presence of primary hydroxyl functions can help to ensure that all of the isocyanate groups in the polymer-modified polyol have reacted. This can help to reduce the amount of volatile organic compounds.

According to another embodiment of the invention, the base polyol has an OH-functionality of 2 to 6. The base polyol may be a polyether polyol that is a homopolymer, a copolymer, or a block copolymer. The polyether polyols may be obtained conventionally by polymerizing alkylene oxides such as ethylene oxide, propylene oxide, butylene oxide, and/or styrene oxide, optionally mixed or in sucession, onto a suitable, preferably polyfunctional, starter molecule. The choice of ethylene oxide or propylene oxide can influence the presence of primary or secondary hydroxyl groups in the resulting polyether polyol as is known in the art. Non-limiting examples for suitable starter molecules are glycerin, water, ethylene glycol, propane diol, diethylene glycol, triethylene glycol, tripropylene glycol, cyclohexanedimethanol, methyl amine, ethyl amine, propylene glycol, trimethylolpropane, trimethylolethane, pentaerythritol, erythritol, sucrose, sorbitol, mannitol, diethanolamine, monoethanolamine, triethanolamine, ethylene diamine, toluene diamine, and propane diamine. The choice of the starter molecule can influence the functionality of the resulting polyether polyol as is known in the art. If a larger amount of primary hydroxyl groups is desired, ethylene oxide is preferably polymerized on the starter molecule. If a larger amount of secondary hydroxyl groups is desired, propylene oxide is preferably polymerized on the starter molecule. Moreover, the polymerization can be conducted in the presence of a catalyst, such as an alkali metal catalyst or a double metal cyanide catalyst, which can also influence the presence of primary and/or secondary hydroxyl groups in the resulting polyether polyol as is known in the art.

The details mentioned above for the preparation, the functionality, and/or the type of hydroxyl groups (that is, primary or secondary hydroxyl groups) of the base polyol preferably also apply for the cross-linking agent mentioned above.

Suitable base polyols for use in the method according to the invention preferably have a hydroxyl number of 20 to 100 mg KOH/g and/or a dynamic viscosity, preferably measured with a Brookfield or Brookfield compatible viscometer, from 400 to 6000 mPa·s at 25 °C. Methods to determine the hydroxyl number are known to the skilled person.

According to another embodiment of the invention, the olamine is used in an amount of from 1 to 25 g/100 g polymer-modified polyol, in particular from 3 to 20 g/100 g polymer-modified polyol, more particularly from 5 to 13 g/100 g polymer-modified polyol. This can help to obtain a polymer-modified polyol with a high solid content. Preferably, the olamine is selected from the group consisting of ethanolamine, diethanolamine, triethanolamine, propanolamine, dipropanolamine, tripropanolamine, isopropranolamine, diisopropanolamine, triisopropanolamine, N-methyldiethanolamine, N-ethyldiethanolamine, N-butyldiethanolamine, ethylene diamine, with ethylene oxide and/or with propylene oxide alkoxylated ethylene diamine, ethylene triamine, with ethylene oxide and/or with propylene oxide alkoxylated ethylene triamine, with ethylene oxide and/or with propylene oxide alkoxylated ammonia, and mixtures thereof.

According to an embodiment of the invention, the olamine is triethanolamine.

According to another embodiment of the invention, the organic polyisocyanate is used in an amount of from 2 to 35 g/100 g polymer-modified polyol, in particular from 4 to 20 g/100 g polymer-modified polyol, more particularly from 8 to 18 g/100 g polymer-modified polyol. This can help to obtain a polymer-modified polyol with a high solid content. Preferably, the organic polyisocyanate is selected from the group consisting of ethylene diisocyanate, 1,4-tetramethylene diisocyanate, 1,6-hexamethylene diisocyanate, cyclohexane 1,3-diisocyanate, cyclohexane 1,4-diisocyanate and mixtures of these isomers, 2,4-toluene diisocyanate, 2,6-toluene diisocyanate and mixtures of these isomers, 2,2'-methylene diphenyl isocyanate, 2,4'-methylene diphenyl isocyanate, 4,4'-methylene diphenyl isocyanate, naphthylene 1,5-diisocyanate, triphenylmethane 4,4',4"-triisocyanate, and mixtures thereof.

Particular preference is generally given to the industrially readily accessible polyisocyanates such as 2,4- and/or 2,6-tolylene diisocyanate and any desired mixtures of these isomers ("TDI"), polyphenyl polymethylene polyisocyanates of the type obtainable by aniline-formaldehyde condensation and subsequent phosgenation ("crude MDI") and polyisocyanates comprising carbodiimide groups, urethane groups, allophanate groups, isocyanurate groups, urea groups or biuret groups ("modified polyisocyanates").

The method of making the polymer-modified polyol may be carried out in the presence of further auxiliary agents or additives. These include, in particular, auxiliary agents such as chain extending agents, low molecular weight crosslinkers, and chain terminators. Examples for chain extending agents and/or low molecular weight crosslinkers are low molecular weight, isocyanate-reactive, difunctional compounds, such as ethylenediamine, diethylenetriamine, N,N-dimethylenediamine, piperazine, 4-aminobenzylamine, 4-aminophenylethylamine, o-, m-, and p-phenylenediamine, 2,4- and/or 2,6-tolylenediamine, 4,4'-diaminodiphenylmethane, diethanolamine, water, ethylene glycol, 1,2-propylene glycol, 1,3-propylene glycol, 1,4- butylene glycol, 2,3-butylene glycol, 1,6-hexanediol, 1,8-octanediol, neopentyl glycol, 1,4-bis-hydroxymethylcyclohexane, 2-methyl-1,3-propanediol, glycerol, for example, or higher functional compounds, such as triethanolamine, trimethylolpropane, 1,2,6-hexanetriol, 1,2,4-butanetriol, pentaerythritol, quinitol, glycerine or sugar alcohols such as sorbitol, mannitol, formitol, or methylglycoside. Isocyanate-reactive, monofunctional compounds, such as monohydric alcohols, primary and secondary amines, may be used as chain terminators. Further auxiliary agents known in the art, such as flame retardants, for example tert-butylphenyl diphenyl phosphate, isopropylphenyl diphenyl phosphate, tricresyl phosphate, and dimethyl methanephosphonate, pigments, emulsifiers, color pastes, stabilizers or fillers such as calcium carbonate, may also be used.

According to an embodiment of the invention, the polymer-modified polyol has a dynamic viscosity from 2000 to 7000 mPa·s, particularly from 3000 to 6000 mPa·s at 25 °C. It has been found that a polymer-modified polyol with a viscosity in the above range has a good processability and can yield foams with good properties. Preferably, the dynamic viscosity is determined using a Brookfield or Brookfield compatible viscometer. For example, the dynamic viscosity can be measured 24 hours after the reaction. For the dynamic viscosity measurement, a 100 rpm spindle and a rotational coaxial cylinder (Searle-type) viscometer such as a Haake Viscometer VT 550 can be used. The spindle may be a rotor SV DIN 53019.

According to an embodiment of the invention, the method of making a polymer-modified polyol is conducted at a temperature from 10 to 200 °C, in particular from 50 to 150 °C. An elevated temperature may be desirable to reduce the reaction time, but may not be necessary. The mixture is then allowed to react. Cooling can be applied if desired or necessary to prevent excessive temperature increases due to the exothermic heat of reaction.

The process for making the polymer-modified polyol may be performed in a continuous, in a semi-continuous, or in a batch process. Preferably, the polymer-modified polyol is made in a semi-continuous process. The base polyol, the polyisocyanate, the olamine, and the catalyst may be added in any order to the reaction mixture.

For example, in a batch process, the base polyol may be initially charged together with the olamine, the catalyst, and optionally the cross-linking agent at temperatures between 10 and 100 °C and the polyisocyanate may be added. It is also possible to initially charge the base polyol only and to add the olamine, the catalyst, optionally the cross-linking agent, and also the polyisocyanate into the base polyol in a synchronous fashion, in which case the heat of reaction is optionally removed by cooling in both scenarios.

However, a continuous or semi-continuous procedure is advantageous where the mixing of the polyisocyanate with the olamine, the base polyol, the catalyst, and optionally the cross-linking agent is effected synchronously, for example in a fast-rotating mixing head, and the more or less converted reaction mixture, depending on the average residence time in the mixing head, is transferred into a stirred tank or agitated stock reservoir tank for further reaction. In this form of reaction management, the reaction mixture may also undergo subsequent reaction in two or more stirred tanks serially connected in the form of a cascade, at temperatures between 50 °C to 150 °C, in which case the heat of reaction is optionally removed by cooling in either scenario.

The polymer-modified polyols according to the invention can also be prepared using a seeding process. When using a seeding process, a polymer-modified polyol with a low solid content, for example from 0.01 to 5 wt.%, based on the amount of polymer-modified polyol, is used as the base polyol and further polyisocyanate as well as olamine and optionally cross-linking agent and optionally catalyst are added. In this mixture, the solid content already present in the mixture in the form of polymer particles act as nuclei that grow as the reaction proceeds. In this way, the solid content can be easily adjusted to the desired value. Moreover, bimodal particle distributions can be obtained in this way. This helps to tailor the properties of the resulting plastics, in particular the foams.

The solid content of the polymer-modified polyol can be adjusted directly by appropriate choice of the starting components. In addition, the solid content of the polymer-modified polyol can also be adjusted by dilution. For example, in a multi-step procedure, a polymer-modified polyol with a high solid content such as from 25 to 55 wt.% is prepared in a first step and is then adjusted to the desired solids concentration by mixing with any desired polyol, for example the base polyol already used in the first step, some other of the polyether polyols mentioned above, a polyester polyol, a further polymer-modified polyol dispersion such as, for example, a polyisocyanate polyaddition (PIPA) polyol dispersion prepared with an olamine in a conventional manner and/or a styrene-acrylonitrile polyether dispersion (SAN-PE) and/or a polyurea dispersion (PUD) or mixtures of all the polyols referred to herein. This is a simple way to expand the property profiles of the polymer-modified polyols of the present invention.

The invention also relates to a polymer-modified polyol obtainable by the method of the invention.

The invention further relates to the use of a polymer-modified polyol obtainable by the method of the invention in the manufacture of polyurethane plastics, in particular of flexible polyurethane foams.

The polymer-modified polyols of the present invention are advantageously processible into foamed polyurethane plastics having improved properties such as enhanced tensile strength and hardness. The polymer-modified polyols are likewise useful for producing elastomers, coatings, and overcoatings. To this end, the polymer-modified polyol dispersions of the present invention are reacted, optionally in the presence of other customary polyols, with aliphatic, cycloaliphatic, araliphatic, aromatic, and heterocyclic polyisocyanates optionally in the presence of known auxiliaries and/or additives.

Known auxiliaries and/or additives are, in particular, water, and/or blowing agents which may optionally be used together with catalysts, foaming auxiliaries, and additives, chain-extending agents and/or crosslinkers, organic or inorganic filling materials, flame retardants and/or synergists.

This provides optionally foamed polyurethane plastics with a reduced flammability, in particular flexible foams, having good mechanical and/or physical properties, thermal and/or hydrolytic stability and substantially no components with a tendency to diffuse out of the optionally foamed plastic at a later stage.

### EXAMPLES

### 1. Preparation of polymer-modified polyols

### Apparatuses used:

- T 50 ULTRA-TURRAX®: High-performance dispersing instrument.

### Chemicals used:

- Base Polyol 1 (BP1): Glycerin started polyoxypropylene polyol capped with ethylene oxide with a functionality of approximately 3, and a LOH of 33-38 mg KOH/g and a weight average molecular weight of Mw=4800 g/mol.
- Base Polyol 2 (BP2): Reactive polyoxyalkylated polyether polyol based on propylene glycol, with a LOH of 27 - 31 mg KOH/g and a weight average molecular weight of Mw=4000 g/mol
- PIPA 10%: Reactive polymer modified polyol with a solid content of 10%, a functionality of approximately 3, and LOH of 47-52 mg KOH/g and a weight average molecular weight of Mw=4850 g/mol.
- Cross-linking agent: Sorbitol started polyoxyalkylene polyol with a LOH of 400-440 mg KOH/g and a weight average molecular weight of Mw=600.
- Triethanolamine (TEA): Tris(2-hydroxyethyl)amine (CAS: 102-71-6)
- Polyisocyanate: Toluenediisocyanate (TDI) - mixture consisting of 80 wt.% 2,4- and 20 wt.% 2,6- Isomer (CAS 584-84-9).
- Catalyst 1: TibKat 716 (TIB Chemicals) - Bi(III) neodecanoate based
- Catalyst 2: Valikat ZN 1910 (Zn(II)neodecanoate; Umicore)
- Catalyst 3: BiCat 3184 (Zn, Bi, Zr carboxylate based; the Shepherd Chemical Company)
- Catalyst 4: BiCat Z (Zn(II)neodecanoate/ZnO based; the Shepherd Chemical Company).
- Catalyst 5: BiCat 3228 (Zn(II)octoate based; the Shepherd Chemical Company)
- Catalyst 6: Kosmos® 54 (Zn(II)ricinoleate; Evonik)
- Catalyst 7: BiCat 8 MA (Zn, Bi carboxylate based; the Shepherd Chemical Company)
- Catalyst 8: Valikat ZB8 (Zn, Bi carboxylate based; Umicore)

Chemical physical properties of the polyols listed were determined in accordance with following standards, internal audit procedures and measurement methods:

**Table 1**

| | | |
|---|---|---|
| Water Content | in wt.% | DIN 51777 |
| Hydroxyl Number (LOH) | in mg KOH/g | DIN 53240 |
| Acid Number | in mg KOH/g | DIN EN ISO 3682 |
| Dynamic Viscosity (25°C) | in mPa·s | DIN 51 550 |
| Color (Pt/Co) | In Hazen | DIN ISO 6271 |

The solid content (in wt.%) of the polymer-modified polyol was calculated by dividing the sum of amounts (wt.) of olamines, organic polyisocyanates, and, if present, crosslinking agents and other isocyanates, if any, by the total amount (wt.) of starting materials and multiplying the result with 100.

General procedure for the preparation of a 10 kg batch of polymer-modified polyol:
The base polyol was charged together with the triethanolamine and the Catalyst into a dried 15L glass reactor, equipped with a stirrer, a dispersing device (Ultraturrax T50), a thermometer, and a dropping funnel. Optionally, cross-linking agent was added. After exclusion of air and moisture by purging the flask with nitrogen, the components were thoroughly mixed at 5000 rpm for 10 minutes whereby the temperature increased to 35-45°C. Then the polyisocyanate was added slowly over a period of 30 minutes and the temperature rose to 55-75°C while the reaction mixture immediately started to turn white. The resulting polyol dispersion was then slowly stirred for another two hours and finally stored for 24 hours with exclusion of air and moisture.

The formulations and the corresponding physical chemical properties of the resulting polymer-modified polyol dispersions 1a to 11 together with the two reference examples Comp a and Comp b that were prepared with the bismuth neodecanoate catalyst Tibkat 716 are given in the tables below:

Formulations for polymer-modified polyol dispersions 1a to 3b and Comp a and Comp b (Comp a and Comp b are reference examples using a Bi catalyst)

**Table 2**

| **Example No.** | **Comp a** | **Comp b** | **Comp 1a** | **1b** | **Comp 2a** | **2b** | **Comp 3a** | **3b** |
|---|---|---|---|---|---|---|---|---|
| BP1 [g] | 82.10 | 76.03 | 82.10 | 76.03 | 82.10 | 76.03 | 82.10 | 76.03 |
| TEA [g] | 8.08 | 9.50 | 8.08 | 9.50 | 8.08 | 9.50 | 8.08 | 9.50 |
| Cross-linking agent [g] | - | 2 | - | 2 | - | 2 | - | 2 |
| Polyisocyanate [g] | 9.82 | 12.47 | 9.82 | 12.47 | 9.82 | 12.47 | 9.82 | 12.47 |
| Catalyst 1 [g] | 0.015 | 0.050 | - | - | - | - | - | - |
| Catalyst 2 [g] | - | - | 0.015 | 0.050 | - | - | - | - |
| Catalyst 3 [g] | - | - | - | - | 0.015 | 0.050 | - | - |
| Catalyst 4 [g] | - | - | - | - | - | - | 0.015 | 0.050 |

Physical Chemical Properties of Samples 1a to 3b and Comp a and Comp b

**Table 3**

| **Example No.** | **Comp a** | **Comp b** | **Comp 1a** | **1b** | **Comp 2a** | **2b** | **Com p 3a** | **3b** |
|---|---|---|---|---|---|---|---|---|
| Molar ratio NCO:OH | 0.694 | 0.750 | 0.694 | 0.750 | 0.694 | 0.750 | 0.69 4 | 0.750 |
| T50 mixing [rpm] | 5000 | 5000 | 5000 | 5000 | 5000 | 5000 | 500 0 | 5000 |
| Solid content [wt.%] | 17.90 | 23.97 | 17.90 | 23.97 | 17.90 | 23.97 | 17.9 0 | 23.97 |
| Dynamic viscosity [mPa·s] | 8010 | 12190 | 4090 | 5650 | 4260 | 5750 | 416 0 | 5810 |
| LOH [mg KOH/g] | 51.8 | 55.6 | 50.9 | 54.2 | 53.3 | 68.5 | 51.1 | 55.8 |

Formulations for polymer-modified polyol dispersions 4a to 6b

**Table 4**

| **Example No.** | **Comp 4a** | **4b** | **Comp 5a** | **5b** | **Comp 6a** | **6b** |
|---|---|---|---|---|---|---|
| BP1 [g] | 82.10 | 76.03 | 82.10 | 76.03 | 82.10 | 76.03 |
| TEA [g] | 8.08 | 9.50 | 8.08 | 9.50 | 8.08 | 9.50 |
| Cross-linking agent [g] | - | 2 | - | 2 | - | 2 |
| Polyisocyanate [g] | 9.82 | 12,47 | 9.82 | 12.47 | 9.82 | 12.47 |
| Catalyst 5 [g] | 0.015 | 0.050 | - | - | - | - |
| Catalyst 6 [g] | - | - | 0.015 | 0.050 | - | - |
| Catalyst 7 [g] | - | - | - | - | 0.015 | 0.050 |

Physical Chemical Properties of Samples 4a to 6b

**Table 5**

| **Example No.** | **Comp 4a** | **4b** | **Comp 5a** | **5b** | **Comp 6a** | **6b** |
|---|---|---|---|---|---|---|
| Molar ratio NCO:OH | 0.694 | 0.750 | 0.694 | 0.750 | 0.694 | 0.750 |
| T50 mixing [rpm] | 5000 | 5000 | 5000 | 5000 | 5000 | 5000 |
| Solid content [wt.%] | 17.90 | 23.97 | 17.90 | 23.97 | 17.90 | 23.97 |
| Dynamic viscosity [mPa·s] | 5120 | 5930 | 3840 | 4710 | 4910 | 5510 |
| LOH [mg KOH/g] | 63 | 52.0 | 47.5 | 57.4 | 44.8 | 55.6 |

Formulations for polymer-modified polyol dispersions 7a to 9

**Table 6**

| **Example No.** | **Comp 7a** | **7b** | **Comp 8** | **9** |
|---|---|---|---|---|
| BP1 [g] | 82.10 | 76.03 | - | - |
| BP2 [g] | - | - | 76.03 | 82.10 |
| TEA [g] | 8.08 | 9.50 | 9.50 | 8.08 |
| Cross-linking agent [g] | - | 2 | - | 2 |
| Polyisocyanate [g] | 9.82 | 12.47 | 12.47 | 9.82 |
| Catalyst 6 [g] | - | - | 0.050 | 0.015 |
| Catalyst 8 [g] | 0.015 | 0.050 | - | - |

Physical Chemical Properties of Samples 7a to 9

**Table 7**

| **Example No.** | **Comp 7a** | **7b** | **Comp 8** | **9** |
|---|---|---|---|---|
| Molar ratio NCO:OH | 0.694 | 0.750 | 0.750 | 0.750 |
| T50 mixing [rpm] | 5000 | 5000 | 5000 | 5000 |
| Solid content [wt.%] | 17.90 | 23.97 | 23.97 | 17.90 |
| Dynamic viscosity [mPa·s] | 4831 | 5760 | 2070 | 4120 |
| LOH [mg KOH/g] | 51.4 | 56.0 | 87.0 | 41.0 |

Manufacturing of 10kg polymer-modified polyol with seeding:
The polyol components consisting of BP1 and the seeding polyol (PIPA 10%) are transferred together with the olamine and the Catalyst in a dried 151 glass reactor, equipped with a stirrer, a dispersing device (Ultraturrax T50), a thermometer and a dropping funnel. After exclusion of air and moisture by purging with nitrogen, the reaction mass is thoroughly mixed for 10 minutes whereby the temperature increases to 35-45°C. Then the polyisocyanate is added slowly during a period of 30 minutes and the temperature rises to 55-75°C while the reaction mixture starts immediately to whiten. The resulting polyol dispersion is then slowly stirred for another two hours and finally stored for 24 hours with exclusion of air and moisture.

Formulation S1 for polymer-modified polyol prepared using the seeding approach

**Table 8**

| **Example No.** | **S1** |
|---|---|
| BP1 [g] | 74.03 |
| PIPA 10% [g] | 2 |
| TEA [g] | 9.50 |
| Cross-linking agent [g] | 2 |
| Polyisocyanate [g] | 12.47 |
| Catalyst 5 [g] | 0.050 |

Physical Chemical Properties of Sample S1

**Table 9**

| **Example No.** | **S1** |
|---|---|
| Molar ratio NCO:OH | 0.750 |
| T50 mixing [rpm] | 5000 |
| Solid content [wt.%] | 23.99 |
| Dynamic viscosity [mPa·s] | 4960 |
| LOH [mg KOH/g] | 52.9 |

Discontinuous preparation of a polymer-modified polyol with a high solid content in terms of a master batch and subsequent dilution with another polymer:
First, a polymer-modified polyol with a solid content of 24% is prepared according to the general procedure without seeding described above. This polymer-modified polyol is then blended before the final 24 hour storage, with a second polyol and intensely mixed for 10 minutes. The resulting polyol dispersion is then slowly stirred for another two hours and finally stored for 24 hours with exclusion of air and moisture.

Formulation D1 for polymer-modified polyol prepared using the dilution approach

**Table 10**

| **Example No.** | **D1** |
|---|---|
| BP1 [g] | 76.03 |
| TEA [g] | 9.50 |
| Cross-linking agent [g] | 2 |
| Polyisocyanate [g] | 12.47 |
| Catalyst 7 [g] | 0.050 |
| Polyol used for dilution | |
| BP1 [g] | 25.00 |

Physical Chemical Properties of Sample S1

**Table 11**

| **Example No.** | **D1** |
|---|---|
| T50 mixing [rpm] | 5000 |
| Final solid content [wt.%] | 18.00 |
| Final dynamic viscosity [mPa·s] | 4730 |
| Final LOH [mg KOH/g] | 52.0 |

As can be seen from the above example, the method according to the invention allows to obtain polymer-modified polyols with a high solid content. It can also be seen from the table that the use of a bismuth carboxylate instead of a zinc carboxylate with other parameters constant results in polymer-modified polyols with a higher dynamic viscosity.

### 2. Preparation of foams

### Apparatuses used:

- Pendraulik® 31832: Laboratory mixer for application of high shear forces
- Foamat®: Foam rise height measurement testing device for determination of rise profiles
- Zwick Roell®Z010: Static materials testing machines for determination of foam hardness, foam density and SAG factor

### Chemicals used:

- Water: Chemical blowing agent.
- DEOA 90%: Crosslinker - 90% solution of diethanolamine in water.
- ORTEGOL® 204 (ORT): Crosslinker with a delayed reaction (Evonik).
- Tegostab® B8783LF2 (LF): Surfactant - efficient HR silicone (Evonik).
- Gelling catalyst: Kosmos® 29 (Evonik).
- DABCO BLV: Amine catalyst (Air products).
- Polyisocyanate: Toluenediisocyanate (TDI) - mixture consisting of 80 wt.% 2,4- and 20 wt.% 2,6- Isomer (CAS 584-84-9).

### Physical mechanical properties:

The physical mechanical properties of the foam samples listed were determined in accordance with the following standards, internal audit procedures and measurement methods:

**Table 12**

| | | |
|---|---|---|
| Hardness | in kPa | DIN EN ISO 3386-1 |
| Air Flow | in L/sec | DIN EN ISO 7231 |
| Resilience | in % | DIN EN ISO 8307 |
| SAG-Factor | | ASTM D-1564-64T |
| Compression Set (22 h, 70°C, 50 %) (CS dry, 50 %) | in % | DIN EN ISO 1856 |

General procedure for the preparation of foams from the polymer-modified polyol dispersions:
All components except the gelling catalyst and the isocyanate were thoroughly mixed at 2800 rpm with the help of the Pendraulik dispergator in a 1 liter plastic bucket for 20 seconds. After addition of the gelling catalyst the reaction mixture was first stirred under the same conditions for another 10 seconds and then, after quick addition of the whole amount of polyisocyanate, the whole reaction mixture was mixed for another 7 seconds at 3500 rpm. The reaction mass was then quickly dropped into a paper box and the foam evolution was monitored via the Foamat®-Apparatus.

The foam formulations 12-18 and the corresponding properties of the resulting foams from the polymer-modified polyol dispersions 1a to 3a together with the two reference examples Comp a and Comp b are given in the tables below:

**Table 13**

| **Example No.** | **Comp 12** | **Comp 13** | **Comp 14** | **15** | **Comp 16** | **17** | **Comp 18** |
|---|---|---|---|---|---|---|---|
| Polyisocyanate [g] | 40.77 | 41.37 | 40.62 | 41.15 | 41.00 | 43.43 | 40.65 |
| Comp a (g) | 100 | - | - | - | - | - | - |
| Comp b (g) | - | 100 | - | - | - | - | - |
| Comp 1a (g) | - | - | 100 | - | - | - | - |
| 1b (g) | - | - | - | 100 | - | - | - |
| Comp 2a (g) | - | - | - | - | 100 | - | - |
| 2b (g) | - | - | - | - | - | 100 | - |
| Comp 3a (g) | - | - | - | - | - | - | 100 |
| Water add [g] | 2.62 | 2.62 | 2.62 | 2.62 | 2.62 | 2.62 | 2.62 |
| Water total [g] | 2.95 | 2.95 | 2.95 | 2.95 | 2.95 | 2.95 | 2.95 |
| DABCO BLV [g] | 0.13 | 0.13 | 0.13 | 0.13 | 0.13 | 0.13 | 0.13 |
| DEOA 90% [g] | 0.8 | 0.8 | 0.8 | 0.8 | 0.8 | 0.8 | 0.8 |
| ORT [g] | 1 | 1 | 1 | 1 | 1 | 1 | 1 |
| LF2 [g] | 0.3 | 0.3 | 0.3 | 0.3 | 0.3 | 0.3 | 0.3 |
| Gelling catalyst [g] | 0.13 | 0.13 | 0.13 | 0.13 | 0.13 | 0.13 | 0.13 |
| Relapse [%] Foamat® value | 2 | 1.5 | 1.2 | 1.1 | 1.8 | 1.7 | 1.6 |
| Rise Time [sec] | 125 | 124 | 136.4 | 143 | 128.8 | 130 | 127 |

Foam properties

**Table 14**

| **Example No.** | **Comp 12** | **Comp 13** | **Comp 14** | **15** | **Comp 16** | **17** | **Comp 18** |
|---|---|---|---|---|---|---|---|
| Density [kg/m³] | 30.9 | 31.2 | 30.6 | 32.9 | 31.1 | 31.4 | 31.4 |
| Hardness [kPa] | 2.90 | 3.80 | 3.30 | 4.03 | 3.97 | 4.57 | 4.44 |
| SAG | 2.99 | 2.97 | 2.98 | 3.01 | 2.92 | 3.09 | 2.84 |
| Airflow [L/sec] | 0.48 | 0.50 | 0.89 | 0.74 | 0.68 | 0,78 | 0.94 |
| CS dry 50, % | 5 | 7 | 3.1 | 4 | 3.9 | 3.4 | 3.8 |
| Resilience, % | 50 | 47 | 54 | 55 | 49 | 54 | 52 |

The foam formulations 19-24 and the corresponding properties of the resulting foams from the polymer-modified polyol dispersions 3b to 6a are given in the tables below:

**Table 15**

| **Example No.** | **19** | **Comp 20** | **21** | **Comp 22** | **23** | **Comp 24** |
|---|---|---|---|---|---|---|
| Polyisocyanate [g] | 41.40 | 42.55 | 40.80 | 40.08 | 41.66 | 39.65 |
| 3b (g) | 100 | - | - | - | - | - |
| Comp 4a (g) | - | 100 | - | - | - | - |
| 4b (g) | - | - | 100 | - | - | - |
| Comp 5a (g) | - | - | - | 100 | - | - |
| 5b (g) | - | - | - | - | 100 | - |
| Comp 6a (g) | - | - | - | - | - | 100 |
| Water add [g] | 2.62 | 2.62 | 2.62 | 2.62 | 2.62 | 2.62 |
| Water total [g] | 2.95 | 2.95 | 2.95 | 2.95 | 2.95 | 2.95 |
| DABCO BLV [g] | 0.13 | 0.13 | 0.13 | 0.13 | 0.13 | 0.13 |
| DEOA 90% [g] | 0.8 | 0.8 | 0.8 | 0.8 | 0.8 | 0.8 |
| ORT [g] | 1 | 1 | 1 | 1 | 1 | 1 |
| LF2 [g] | 0.3 | 0.3 | 0.3 | 0.3 | 0.3 | 0.3 |
| Gelling catalyst [g] | 0.13 | 0.13 | 0.13 | 0.13 | 0.13 | 0.13 |
| Relapse [%] Foamat® value | 1.7 | 1.9 | 1.5 | 1.5 | 1.3 | 1.1 |
| Rise Time [sec] | 112.7 | 128.8 | 130 | 127 | 130.6 | 141 |

Foam properties

**Table 16**

| **Example No.** | **19** | **Comp 20** | **21** | **Comp 22** | **23** | **Comp 24** |
|---|---|---|---|---|---|---|
| Density [kg/m³] | 29.4 | 30.8 | 32.0 | 30.1 | 30.7 | 30.3 |
| Hardness [kPa] | 5.01 | 3.87 | 4.70 | 3.18 | 4.53 | 3.13 |
| SAG | 3.11 | 2.94 | 3.04 | 3.01 | 3.18 | 2.98 |
| Airflow [L/sec] | 0.80 | 0.50 | 0.72 | 0.60 | 0.70 | 0.95 |
| CS dry 50, % | 4.5 | 4.2 | 3 | 4.5 | 3.9 | 4 |
| Resilience, % | 51 | 54 | 56 | 48 | 50 | 59 |

The foam formulations 26-32 and the corresponding properties of the resulting foams from the polymer-modified polyol dispersions 6b to 9 as well as S1 and D1 are given in the tables below:

**Table 17**

| **Example No.** | **26** | **Comp 27** | **28** | **Comp 29** | **30** | **31** | **32** |
|---|---|---|---|---|---|---|---|
| Polyisocyanate [g] | 41.37 | 40.70 | 41.44 | 46.39 | 39.04 | 40.94 | 40.80 |
| 6b (g) | 100 | - | - | - | - | - | - |
| Comp 7a (g) | - | 100 | - | - | - | - | - |
| 7b (g) | - | - | 100 | - | - | - | - |
| Comp 8 (g) | - | - | - | 100 | - | - | - |
| 9 (g) | - | - | - | - | 100 | - | - |
| S1 (g) | | | | | | 100 | - |
| D1 (g) | | | | | | - | 100 |
| Water add [g] | 2.62 | 2.62 | 2.62 | 2.33 | 2.33 | 2.62 | 2.62 |
| Water total [g] | 2.95 | 2.95 | 2.95 | 2.7 | 2.7 | 2.95 | 2.95 |
| DABCO BLV [g] | 0.13 | 0.13 | 0.13 | 0.08 | 0.08 | 0.13 | 0.13 |
| DEOA 90% [g] | 0.8 | 0.8 | 0.8 | 0.7 | 0.7 | 0.8 | 0.8 |
| ORT [g] | 1 | 1 | 1 | 1.2 | 1.2 | 1 | 1 |
| LF2 [g] | 0.3 | 0.3 | 0.3 | 0.25 | 0.25 | 0.3 | 0.3 |
| Gelling catalyst [g] | 0.13 | 0.13 | 0.13 | 0.14 | 0.14 | 0.13 | 0.13 |
| Relapse [%] Foamat® value | 1.2 | 1 | 1.5 | 0.6 | 0.5 | 1.4 | 1.2 |
| Rise Time [sec] | 126 | 120 | 116 | 190 | 150 | 128 | 123 |

Foam properties

**Table 18**

| **Example No.** | **26** | **Comp 27** | **28** | **Comp 29** | **30** | **31** | **32** |
|---|---|---|---|---|---|---|---|
| Density [kg/m³] | 29.4 | 30.5 | 29.2 | 33.4 | 33.5 | 29.8 | 30.5 |
| Hardness [kPa] | 4.14 | 3.20 | 4.50 | 2.80 | 2.94 | 4.78 | 3.28 |
| SAG | 3.04 | 3.01 | 3.00 | 2.94 | 2.80 | 3.00 | 2.91 |
| Airflow [L/sec] | 0.81 | 0.93 | 0.90 | 1.67 | 0.42 | 0.69 | 0.78 |
| CS dry 50, % | 3.8 | 5 | 4.3 | 3.8 | 4.1 | 3.1 | 4.7 |
| Resilience, % | 53 | 51 | 55 | 56 | 56 | 55 | 52 |

As can be seen from examples 14 to 32, foams with a good SAG factor and a good resilience can be prepared from the polymer-modified polyol dispersions 1a to 9 as well as S1 and D1 prepared according to the method of the invention.

## Claims

1. A method of making a polymer-modified polyol having a solid content from 13 to 55 wt.% wherein an olamine is reacted with an organic polyisocyanate in the presence of a base polyol and at least one catalyst, wherein said at least one catalyst is a zinc carboxylate, and wherein the base polyol has hydroxyl functions wherein more than 20 % of said hydroxyl functions are primary hydroxyl functions, **characterized in that** the reaction is carried out in the presence of a cross-linking agent having a weight average molecular weight from 200 to 1000 g/mol.

2. The method according to claim 1 **characterized in that** the polymer-modified polyol has a solid content from 15 to 50 wt.%.

3. The method according to any of the preceding claims **characterized in that** the equivalents ratio of active hydrogen containing groups of said olamine to isocyanate groups is from 1 to 2, in particular from 1.05 to 1.7.

4. The method according to any of the preceding claims **characterized in that** said at least one catalyst is used in an amount of greater than 0.01, greater than 0.03 or greater than 0.04 or greater than 0.1 mmol/100 g polymer-modified polyol or in an amount of from 0.105 to 0.25 mmol/100 g polymer-modified polyol, in particular from 0.11 to 0.2 mmol/100 g polymer-modified polyol.

5. The method according to any of the preceding claims **characterized in that** said at least one catalyst is devoid of carbon-metal bonds.

6. The method according to any of the preceding claims **characterized in that** the carboxylate anion of said zinc carboxylate contains from 2 to 22, in particular from 8 to 18, carbon atoms.

7. The method according to any of the preceding claims **characterized in that** said at least one catalyst is selected from the group consisting of zinc(II) octoate, zinc(II) ricinoleate, and zinc(II) neodecanoate.

8. The method according to any of the preceeding claims **characterized in that** said cross-linking agent has a weight average molecular weight from 400 to 900 g/mol, in particular from 500 to 800 g/mol.

9. The method according to any of the preceeding claims **characterized in that** said cross-linking agent has a functionality of 2 to 8, in particular 3 to 6, active hydrogen containing groups, capable of reacting with isocyanate functions.

10. The method according to any of the preceeding claims **characterized in that** said cross-linking agent contains hydroxyl functions.

11. The method according to any of the preceeding claims **characterized in that** said cross-linking agent is a polyether polyol.

12. The method according to any of the preceeding claims **characterized in that** said cross-linking agent is present in the reaction in an amount of from 0.1 to 11 g/100 g polymer-modified polyol, in particular from 0.2 to 7 g/100 g polymer-modified polyol, more particularly from 0.5 to 6 g/100 g polymer-modified polyol.

13. The method according to any of the preceding claims **characterized in that** said base polyol has a weight average molecular weight from 2000 to 15000 g/mol, in particular from 2500 to 12000 g/mol, more particularly from 3000 to 7000 g/mol.

14. The method according to any of the preceding claims **characterized in that** more than 50 % of said hydroxyl functions of said base polyol, in particular more than 70 % or more than 80 % of said hydroxyl functions of said base polyol, are primary hydroxyl functions.

15. The method according to any of the preceding claims **characterized in that** said base polyol has an OH-functionality of 2 to 6.

16. The method according to any of the preceding claims **characterized in that** said olamine is used in an amount of from 1 to 25 g/100 g polymer-modified polyol, in particular from 3 to 20 g/100 g polymer-modified polyol, more particularly from 5 to 13 g/100 g polymer-modified polyol.

17. The method according to any of the preceding claims **characterized in that** said olamine is selected from the group consisting of ethanolamine, diethanolamine, triethanolamine, propanolamine, dipropanolamine, tripropanolamine, isopropranolamine, diisopropanolamine, triisopropanolamine, N-methyldiethanolamine, N-ethyldiethanolamine, N-butyldiethanolamine, ethylene diamine, with ethylene oxide and/or with propylene oxide alkoxylated ethylene diamine, ethylene triamine, with ethylene oxide and/or with propylene oxide alkoxylated ethylene triamine, with ethylene oxide and/or with propylene oxide alkoxylated ammonia, and mixtures thereof.

18. The method according to any of the preceding claims **characterized in that** said organic polyisocyanate is used in an amount of from 2 to 35 g/100 g polymer-modified polyol, in particular from 4 to 20 g/100 g polymer-modified polyol, more particularly from 8 to 18 g/100 g polymer-modified polyol.

19. The method according to any of the preceding claims **characterized in that** said organic polyisocyanate is selected from the group consisting of ethylene diisocyanate, 1,4-tetramethylene diisocyanate, 1,6-hexamethylene diisocyanate, cyclohexane 1,3-diisocyanate, cyclohexane 1,4-diisocyanate and mixtures of these isomers, 2,4-toluene diisocyanate, 2,6-toluene diisocyanate and mixtures of these isomers, 2,2'-methylene diphenyl isocyanate, 2,4'-methylene diphenyl isocyanate, 4,4'-methylene diphenyl isocyanate, naphthylene 1,5-diisocyanate, triphenylmethane 4,4',4"-triisocyanate, and mixtures thereof.

20. The method according to any of the preceding claims **characterized in that** said polymer-modified polyol has a dynamic viscosity from 2000 to 7000 mPa·s, particularly from 3000 to 6000 mPa·s at 25 °C.

21. The method according to any of the preceding claims **characterized in that** the method is conducted at a temperature from 10 to 200 °C, in particular from 50 to 150 °C.

22. Polymer-modified polyol obtainable according to any of the claims 1 to 21.

23. Use of a polymer-modified polyol according to claim 22 in the manufacture of polyurethane plastics, in particular of flexible polyurethane foams.

24. Method for the preparation of optionally foamed polyurethane plastics, wherein at least one polyisocyanate is reacted with a polymer-modified polyol according to claim 22, optionally in the presence of water and/or volatile organic substances as blowing agents and also further optionally by co-use of catalysts, foaming auxiliaries and additives, chain-extending and/or cross-linking agents, organic or inorganic filling materials, flame retardants and/or synergists.

## Patentansprüche

1. Ein Verfahren zur Herstellung eines polymermodifizierten Polyols mit einem Feststoffgehalt von 13 bis 55 Gew.-%, wobei ein Olamin in Gegenwart eines Basispolyols und mindestens eines Katalysators mit einem organischen Polyisocyanat umgesetzt wird, wobei dieser mindestens eine Katalysator ein Zinkcarboxylat ist und das Basispolyol Hydroxylfunktionen besitzt, wobei mehr als 20 % dieser Hydroxylfunktionen primäre Hydroxylfunktionen sind, **dadurch gekennzeichnet, dass** die Reaktion in Gegenwart eines Vernetzungsmittels mit einem Gewichtsmittel des Molekulargewichts von 200 bis 1000 g/mol durchgeführt wird.

2. Das Verfahren nach Anspruch 1, **dadurch gekennzeichnet, dass** das polymermodifizierte Polyol einen Feststoffgehalt von 15 bis 50 Gew.-% aufweist.

3. Das Verfahren nach einem der vorhergehenden Ansprüche, **dadurch gekennzeichnet, dass** das Äquivalentverhältnis von aktiven Wasserstoff enthaltenden Gruppen des Olamins zu den Isocyanatgruppen 1 bis 2, insbesondere 1,05 bis 1,7, beträgt.

4. Das Verfahren nach einem der vorhergehenden Ansprüche, **dadurch gekennzeichnet, dass** der mindestens eine Katalysator mit einem Anteil von größer als 0,01, größer als 0,03 oder größer als 0,04 oder größer als 0,1 mmol/100 g polymermodifiziertes Polyol oder mit einem Anteil von 0,105 bis 0,25 mmol/100 g polymermodifiziertes Polyol, insbesondere von 0,11 bis 0,2 mmol/100 g, polymermodifiziertes Polyol verwendet wird.

5. Das Verfahren nach einem der vorhergehenden Ansprüche, **dadurch gekennzeichnet, dass** der mindestens eine Katalysator frei von Kohlenstoff-Metall-Bindungen ist.

6. Das Verfahren nach einem der vorhergehenden Ansprüche, **dadurch gekennzeichnet, dass** das Carboxylatanion des Zinkcarboxylats 2 bis 22, insbesondere 8 bis 18, Kohlenstoffatome enthält.

7. Das Verfahren nach einem der vorhergehenden Ansprüche, **dadurch gekennzeichnet, dass** der mindestens eine Katalysator aus der Gruppe ausgewählt ist, die aus Zink(II)-octoat, Zink(II)-ricinoleat und Zink(II)-neodecanoat besteht.

8. Das Verfahren nach einem der vorhergehenden Ansprüche, **dadurch gekennzeichnet, dass** das Vernetzungsmittel ein Gewichtsmittel des Molekulargewichts von 400 bis 900 g/mol und insbesondere von 500 bis 800 g/mol besitzt.

9. Das Verfahren nach einem der vorhergehenden Ansprüche, **dadurch gekennzeichnet, dass** das Vernetzungsmittel eine Funktionalität von 2 bis 8, insbesondere 3 bis 6, aktiven Wasserstoff enthaltenden Gruppen, die zur Reaktion mit den Isocyanatfunktionen in der Lage sind, besitzt.

10. Das Verfahren nach einem der vorhergehenden Ansprüche, **dadurch gekennzeichnet, dass** das Vernetzungsmittel Hydroxylfunktionen besitzt.

11. Das Verfahren nach einem der vorhergehenden Ansprüche, **dadurch gekennzeichnet, dass** das Vernetzungsmittel ein Polyetherpolyol ist.

12. Das Verfahren nach einem der vorhergehenden Ansprüche, **dadurch gekennzeichnet, dass** das Vernetzungsmittel in der Reaktion in einer Menge von 0,1 bis 11 g/100 g polymermodifiziertes Polyol, insbesondere von 0,2 bis 7 g/100 g polymermodifiziertes Polyol, dabei insbesondere von 0,5 bis 6 g/100 g, polymermodifiziertes Polyol vorhanden ist.

13. Das Verfahren nach einem der vorhergehenden Ansprüche, **dadurch gekennzeichnet, dass** das Basispolyol ein Gewichtsmittel des Molekulargewichts von 2000 bis 15 000 g/mol, insbesondere von 2500 bis 12 000 g/mol, dabei insbesondere von 3000 bis 7000 g/mol, aufweist.

14. Das Verfahren nach einem der vorhergehenden Ansprüche, **dadurch gekennzeichnet, dass** mehr als 50 % der Hydroxylfunktionen des Basispolyols, insbesondere mehr als 70 % oder mehr als 80 % dieser Hydroxylfunktionen dieses Basispolyols, primäre Hydroxylfunktionen sind.

15. Das Verfahren nach einem der vorhergehenden Ansprüche, **dadurch gekennzeichnet, dass** das Basispolyol eine OH-Funktionalität von 2 bis 6 aufweist.

16. Das Verfahren nach einem der vorhergehenden Ansprüche, **dadurch gekennzeichnet, dass** das Olamin in einer Menge von 1 bis 25 g/100 g polymermodifiziertes Polyol, insbesondere von 3 bis 20 g/100 g polymermodifiziertes Polyol, dabei insbesondere von 5 bis 13 g/100 g polymermodifiziertes Polyol, verwendet wird.

17. Das Verfahren nach einem der vorhergehenden Ansprüche, **dadurch gekennzeichnet, dass** das Olamin aus der Gruppe ausgewählt ist, die aus Ethanolamin, Diethanolamin, Triethanolamin, Propanolamin, Dipropanolamin, Tripropanolamin, Isopropanolamin, Diisopropanolamin, Triisopropanolamin, N-Methyldiethanolamin, N-Ethyldiethanolamin, N-Butyldiethanolamin, Ethylendiamin, mit Ethylenoxid und/oder Propylenoxid alkoxyliertem Ethylendiamin, Ethylentriamin, mit Ethylenoxid und/oder Propylenoxid alkoxyliertem Ethylentriamin, mit Ethylenoxid und/oder Propylenoxid alkoxyliertem Ammoniak und Gemischen davon besteht.

18. Das Verfahren nach einem der vorhergehenden Ansprüche, **dadurch gekennzeichnet, dass** das organische Polyisocyanat in einer Menge von 2 bis 35 g/100 g polymermodifiziertes Polyol, insbesondere von 4 bis 20 g/100 g polymermodifiziertes Polyol, dabei insbesondere von 8 bis 18 g/100 g polymermodifiziertes Polyol, verwendet wird.

19. Das Verfahren nach einem der vorhergehenden Ansprüche, **dadurch gekennzeichnet, dass** das organische Polyisocyanat aus der Gruppe ausgewählt ist, die aus Ethylendiisocyanat, 1,4-Tetramethylendiisocyanat, 1,6-Hexamethylendiisocyanat, Cyclohexan-1,3-diisocyanat, Cyclohexan-1,4-diisocyanat und Gemischen dieser Isomeren, 2,4-Toluoldiisocyanat, 2,6-Toluoldiisocyanat und Gemischen dieser Isomeren, 2,2'-Methylendiphenylisocyanat, 2,4'-Methylendiphenylisocyanat, 4,4'-Methylendiphenylisocyanat, Naphthylen-1,5-diisocyanat, Triphenylmethan-4,4',4"-triisocyanat und Gemischen davon besteht.

20. Das Verfahren nach einem der vorhergehenden Ansprüche, **dadurch gekennzeichnet, dass** das polymermodifizierte Polyol eine dynamische Viskosität von 2000 bis 7000 mPa·s, insbesondere 3000 bis 6000 mPa·s bei 25 °C, aufweist.

21. Das Verfahren nach einem der vorhergehenden Ansprüche, **dadurch gekennzeichnet, dass** das Verfahren bei einer Temperatur von 10 bis 200 °C, insbesondere 50 bis 150 °C, durchgeführt wird.

22. Polymermodifiziertes Polyol, erhältlich nach einem der Ansprüche 1 bis 21 .

23. Verwendung eines polymermodifizierten Polyols nach Anspruch 22 in der Herstellung von Polyurethankunststoffen, insbesondere flexiblen Polyurethanschäumen.

24. Verfahren zur Herstellung optional verschäumter Polyurethankunststoffe, wobei mindestens ein Polyisocyanat mit einem polymermodifizierten Polyol nach Anspruch 22, optional in Gegenwart von Wasser und/oder flüchtigen organischen Substanzen als Blähmittel und auch ferner optional unter gemeinsamer Verwendung von Katalysatoren, Schaumhilfsstoffen und -additiven, Kettenverlängerungs- und/oder Vernetzungsmitteln, organischen oder anorganischen Füllstoffen, Flammschutzmitteln und/oder Synergisten umgesetzt wird.

## Revendications

1. Procédé de fabrication d'un polyol modifié avec un polymère ayant une teneur en matières solides de 13 à 55 % en pds, une olamine étant mise à réagir avec un polyisocyanate organique en présence d'un polyol de base et d'au moins un catalyseur, ledit au moins un catalyseur étant un carboxylate de zinc, et le polyol de base ayant des fonctions hydroxyles, plus de 20 % desdites fonctions hydroxyles étant des fonctions hydroxyles primaires, **caractérisé en ce que** la réaction est conduite en la présence d'un agent de réticulation ayant un poids moléculaire moyen en poids de 200 à 1 000 g/mole.

2. Procédé selon la revendication 1 **caractérisé en ce que** le polyol modifié avec un polymère présente une teneur en matières solides de 15 à 50 % en pds.

3. Procédé selon l'une quelconque des revendications précédentes **caractérisé en ce que** le rapport des équivalents des groupes contenant de l'hydrogène actif de ladite olamine aux groupes isocyanate est de 1 à 2, en particulier de 1,05 à 1,7.

4. Procédé selon l'une quelconque des revendications précédentes **caractérisé en ce que** ledit au moins un catalyseur est utilisé en une quantité supérieure à 0,01, supérieure à 0,03 ou supérieure à 0,04 ou plus que 0,1 mmole/100 g de polyol modifié avec un polymère ou en une quantité de 0,105 à 0,25 mmole/100 g de polyol modifié avec un polymère, en particulier de 0,11 à 0,2 mmole/100 g de polyol modifié avec un polymère.

5. Procédé selon l'une quelconque des revendications précédentes **caractérisé en ce que** ledit au moins un catalyseur est dépourvu de liaisons carbone-métal.

6. Procédé selon l'une quelconque des revendications précédentes **caractérisé en ce que** l'anion carboxylate dudit carboxylate de zinc contient de 2 à 22, en particulier de 8 à 18 atomes de carbone.

7. Procédé selon l'une quelconque des revendications précédentes **caractérisé en ce que** ledit au moins un catalyseur est sélectionné dans le groupe constitué de l'octoate de zinc (II), du ricinoléate de zinc (II), et du néodécanoate de zinc (II).

8. Procédé selon l'une quelconque des revendications précédentes **caractérisé en ce que** ledit agent de réticulation présente un poids moléculaire moyen en poids de 400 à 900 g/mole, en particulier de 500 à 800 g/mole.

9. Procédé selon l'une quelconque des revendications précédentes **caractérisé en ce que** ledit agent de réticulation possède une fonctionnalité de 2 à 8, en particulier de 3 à 6, groupes contenant de l'hydrogène actif, capables de réagir avec des fonctions isocyanates.

10. Procédé selon l'une quelconque des revendications précédentes **caractérisé en ce que** ledit agent de réticulation contient des fonctions hydroxyles.

11. Procédé selon l'une quelconque des revendications précédentes **caractérisé en ce que** ledit agent de réticulation est un polyéther polyol.

12. Procédé selon l'une quelconque des revendications précédentes **caractérisé en ce que** ledit agent de réticulation est présent dans la réaction en une quantité de 0,1 à 11 g/100 g de polyol modifié avec un polymère, en particulier de 0,2 à 7 g/100 g de polyol modifié avec un polymère, plus particulièrement de 0,5 à 6 g/100 g de polyol modifié avec un polymère.

13. Procédé selon l'une quelconque des revendications précédentes **caractérisé en ce que** ledit polyol de base présente un poids moléculaire moyen en poids de 2 000 à 15 000 g/mole, en particulier de 2 500 à 12 000 g/mole, plus particulièrement de 3 000 à 7 000 g/mole.

14. Procédé selon l'une quelconque des revendications précédentes **caractérisé en ce que** plus de 50 % desdites fonctions hydroxyles dudit polyol de base, en particulier plus de 70 % ou plus à 80 % desdites fonctions hydroxyles dudit polyol de base, sont des fonctions hydroxyles primaires.

15. Procédé selon l'une quelconque des revendications précédentes **caractérisé en ce que** ledit polyol de base présente une fonctionnalité OH de 2 à 6.

16. Procédé selon l'une quelconque des revendications précédentes **caractérisé en ce que** ladite olamine est utilisée en une quantité de 1 à 25 g/100 g de polyol modifié avec un polymère, en particulier de 3 à 20 g/100 g de polyol modifié avec un polymère, plus particulièrement de 5 à 13 g/100 g de polyol modifié avec un polymère.

17. Procédé selon l'une quelconque des revendications précédentes **caractérisé en ce que** ladite olamine est sélectionnée dans le groupe constitué de l'éthanolamine, de la diéthanolamine, triéthanolamine, propanolamine, dipropanolamine, tripropanolamine, isopropanolamine, diisopropanolamine, triisopropanolamine, *N*-méthyldiéthanolamine, *N*-éthyldiéthanolamine, *N-*butyldiéthanolamine, de l'éthylène diamine, avec de l'oxyde d'éthylène et/ou avec de l'oxyde de propylène diamine d'éthylène alcoxylé, de l'éthylène triamine, avec de l'oxyde d'éthylène et/ou avec de l'oxyde de propylène triamine d'éthylène alcoxylé, avec de l'oxyde d'éthylène et/ou avec de l'oxyde de propylène ammoniac alcoxylé, et leurs mélanges.

18. Procédé selon l'une quelconque des revendications précédentes **caractérisé en ce que** ledit polyisocyanate organique est utilisé en une quantité de 2 à 35 g/100 g de polyol modifié avec un polymère, en particulier de 4 à 20 g/100 g de polyol modifié avec un polymère, plus particulièrement de 8 à 18 g/100 g de polyol modifié avec un polymère.

19. Procédé selon l'une quelconque des revendications précédentes **caractérisé en ce que** ledit polyisocyanate organique est sélectionné dans le groupe constitué du diisocyanate d'éthylène, du diisocyanate de 1,4-tétraméthylène, du 1,6-diisocyanate d'hexaméthylène, du 1,3-diisocyanate de cyclohexane, du 1,4-diisocyanate de cyclohexane et les mélanges de ces isomères, du diisocyanate de 2,4-toluène, du diisocyanate de 2,6-toluène et les mélanges de ces isomères, de l'isocyanate de 2,2'-méthylène diphényle, de l'isocyanate de 2,4'-méthylène diphényle, de l'isocyanate de 4,4'-méthylène diphényle, du 1,5-diisocyanate de naphtylène, du 4,4',4"-triisocyanate de triphénylméthane, et leurs mélanges.

20. Procédé selon l'une quelconque des revendications précédentes **caractérisé en ce que** ledit polyol modifié avec un polymère présente une viscosité dynamique de 2 000 à 7 000 mPa·s, particulièrement de 3 000 à 6 000 mPa·s à 25°C.

21. Procédé selon l'une quelconque des revendications précédentes **caractérisé en ce que** le procédé est conduit à une température de 10 à 200°C, en particulier de 50 à 150°C.

22. Polyol modifié avec un polymère pouvant être obtenu selon l'une quelconque des revendications 1 à 21.

23. Utilisation d'un polyol modifié avec un polymère selon la revendication 22 dans la fabrication de plastiques de polyuréthane, en particulier de mousses de polyuréthane souples.

24. Procédé de préparation de plastiques de polyuréthane éventuellement expansés, au moins un polyisocyanate étant mis à réagir avec un polyol modifié avec un polymère selon la revendication 22, éventuellement en la présence d'eau et/ou de substances organiques volatiles comme agents d'expansion et également en outre éventuellement par la co-utilisation de catalyseurs, d'auxiliaires d'expansion et d'additifs, d'agents d'extension de chaîne et/ou de réticulation, de matériaux de charge organiques ou inorganiques, d'agents ignifuges et/ou d'agents de mise en synergie.
